# EUROPÄISCHE PATENTSCHRIFT

(11) **EP 1 234 692 B1**
(45) Veröffentlichungstag und Bekanntmachung des Hinweises auf die Patenterteilung: **03.01.2007**
(21) Anmeldenummer: 02000573.2
(22) Anmeldetag: 10.01.2002
(51) Int. Cl.: B60C 11/03, B60C 11/13, B60C 11/12

(54) **Fahrzeugreifen mit Profilelementen, die quer liegende Feineinschnitte aufweisen.**
Vehicle tyre whose tread land portions comprise transverse sipes.
Bandage pneumatique pour véhicule dont les éléments en relief contiennent des incisions transversales.

(30) Priorität: 22.02.2001 DE 10108595
(43) Veröffentlichungstag der Anmeldung: 28.08.2002
(73) Patentinhaber: Continental Aktiengesellschaft, 30165 Hannover (DE)
(72) Erfinder: Rodewald, Helmut, 31249 Rötzum (DE)

(56) Entgegenhaltungen:
- EP-A- 0 829 381
- PATENT ABSTRACTS OF JAPAN vol. 2000, no. 14, 5. März 2001 (2001-03-05) & JP 2000 318413 A (BRIDGESTONE CORP), 21. November 2000 (2000-11-21)
- PATENT ABSTRACTS OF JAPAN vol. 1999, no. 11, 30. September 1999 (1999-09-30) & JP 11 151914 A (BRIDGESTONE CORP), 8. Juni 1999 (1999-06-08)

## Beschreibung

Die Erfindung betrifft einen Fahrzeugreifen mit einem drehsinngebunden ausgeführten Laufflächenprofil mit Profilelementen mit zumindest einem Einschnitt endlicher Breite, welcher sich quer oder im Wesentlichen quer zur Reifenumfangsrichtung erstreckt und, unter Berücksichtigung der Einschnittbreite, von gegensinnig ausgeführten Einschnittwänden begrenzt ist, wobei Einschnittflächen in der einen Begrenzungswand zumindest einen einspringenden Bereich und Einschnittflächen in der zweiten Begrenzungswand zumindest einen vorspringenden Bereich bilden.

Fahrzeugreifen mit Laufflächen mit derart ausgeführten Einschnitten sind in verschiedenen Ausführungen bekannt. So weisen beispielsweise die aus der EP-A-0 515 349 bekannten Einschnitte Einschnittwände auf, die ein Netzwerk aus vor- und rückspringenden Kanten und Flächen bilden. Dieses Netzwerk hat den Vorteil, eine Vielzahl gegenseitiger Abstützflächen für die Einschnittwände zu bilden, welche die Beweglichkeit des Profilelements begrenzen und somit dem Profilelement eine gewisse Steifigkeit verleihen, was vor allem für das Bremsen, sei es auf nassen oder trockenen Fahrbahnen, von Vorteil ist. Hingegen ist das Öffnungsvermögen derart ausgeführter Einschnitte etwas begrenzt, was beim Beschleunigen, bei Traktionsbeanspruchungen, nachteilig ist. Darüber hinaus sind die Lamellenbleche, die derart ausgeführte Einschnitte bilden können, in Folge der Komplexität der nachzustellenden Struktur schwierig herstellbar.

Aus der EP 0 829 381 A2 ist eine andere Anordnung von parallelen, quer zur Umfangsrichtung angeordneten Einschnitten bekannt geworden, bei der jeder Einschnitt aus zwei entgegengesetzt zueinander, von der radialen Richtung abweichend geneigten Abschnitten besteht und wobei der erste Abschnitt gegen den zweiten Abschnitt in achsparalleler Richtung versetzt angeordnet ist. Die einander zugewandten Abschnittsenden eines Feineinschnittes sind durch einen in Umfangsrichtung angeordneten Einschnitt miteinander verbunden. Durch diese Ausführung der Feineinschnitte soll die Steifigkeit des Profilelements, insbesondere in Fahrtrichtung und entgegen der Fahrtrichtung durch gegenseitge Abstützung der geneigten Einschnittswände erhöht werden.

Der Erfindung liegt nun die Aufgabe zu Grunde, bei einem Reifen der eingangs genannten Art die Einschnitte derart zu gestalten, dass sie dann, wenn es von Vorteil bzw. erforderlich ist, Griffkanten zur Verfügung stellen. Beim Bremsen sollen sich jedoch die Profilelemente ausreichend versteifen können.

Gelöst wird die gestellte Aufgabe erfindungsgemäß dadurch, dass die den ein- und den vorspringenden Bereich bildenden Einschnittflächen zwei schmale, insbesondere parallelogrammförmige, Flächen und eine von diesen begrenzte trapezförmige Fläche aufweisen, wobei die längere Parallelseite der trapezförmigen Fläche die Einschnittkante an der Peripherie der Lauffläche bildet, und dass der vorspringende Bereich gegen die Abrollrichtung des Reifens weisend ausgerichtet ist.

Die Einschnittwände weisen daher zumindest einen besonders ausgeführten einspringenden und einen mit diesem zusammenwirkenden vorspringenden Bereich auf. Es ist jedoch nicht nur die spezielle Ausführung dieser Bereiche von Bedeutung, sondern auch ihre spezielle Orientierung bezüglich der Abrollrichtung des Reifens. Diese Orientierung hat bei Belastungen bzw. Kräften, die in oder gegen die Abrollrichtung wirken, bestimmte Effekte zur Folge. Bei Belastungen gegen die Abrollrichtung, beim Bremsen, werden die vorspringenden Bereiche in die einspringenden Bereiche gepresst, wodurch das Profilelement versteift und somit seine Beweglichkeit reduziert wird. In radialer Richtung erfolgt ein gegenseitiges Abstützen im Bereich der schmalen Seitenflächen, was zusätzlich die Beweglichkeit des Profilelements herabsetzt. Beim Beschleunigen kann hingegen der vorspringende Bereich seinen Abstand zum einspringenden Bereich vergrößern, sodass ausgeprägte Griffkanten zur Verfügung stehen.

Bei einer bevorzugten Ausführungsform der Erfindung sind die trapezförmigen Einschnittflächen zumindest im Wesentlichen als gleichseitige Trapeze ausgeführt (Anspruch 2). Diese Maßnahme unterstützt eine Vergleichmäßigung der erzielbaren Effekt über die Profilelementbreite.

Es ist von Vorteil, wenn die weiteren Einschnittabschnitte zumindest im Wesentlichen gerade verlaufen. Damit lassen sich Einflüsse des sonstigen Einschnittverlaufs auf die Profilblocksteifigkeit weitgehend vermeiden.

Werden die Einschnitte gegenüber der Radialrichtung geneigt, können, je nach Neigung und Neigungswinkel, die erzielbaren Stützeffekte verstärkt oder auch abgeschwächt werden.

Neben bei in seitlicher Richtung wirkenden Kräften ist die Abstützwirkung dann besonders hoch, wenn die von den parallelogrammförmigen Flächen an der Peripherie der Lauffläche gebildeten Einschnittkanten zumindest im Wesentlichen in Umfangsrichtung verlaufen.

Die Erfindung wird anhand der schematischen Zeichnung, die Ausführungsbeispiele darstellt, näher beschrieben. Dabei zeigen
Fig. 1 eine Draufsicht auf eine Teilabwicklung einer Ausführungsform eines erfindungsgemäß ausgeführten Laufflächenprofils und
Fig. 2 Schrägansichten der beiden Teile eines Profilblocks, welcher entlang eines Einschnittes durchtrennt ist.

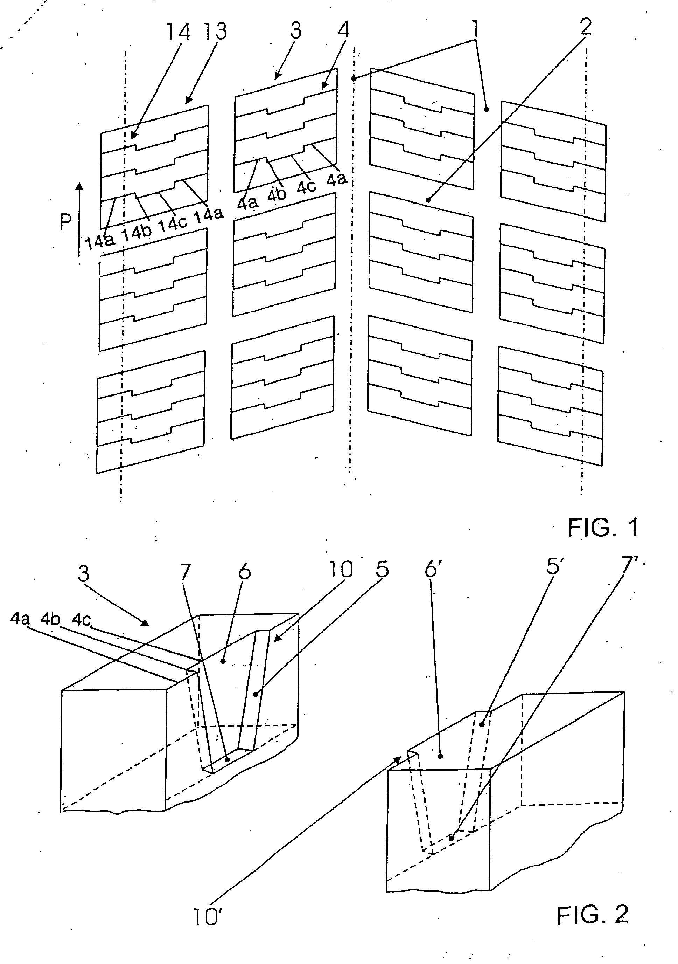

Fig. 1 zeigt eine Teilabwicklung des Laufflächenprofils eines Fahrzeugreifens, welches vorzugsweise für PKW-Winterreifen vorgesehen ist und welches durch drei Umfangsnuten 1 - einer zentralen, entlang des Reifenäquators verlaufenden Umfangsnut 1 und jeweils einer in jeder Laufflächenhälfte verlaufenden Umfangsnut 1 - und durch bezüglich der zentralen Umfangsnut 1 gepfeilt bzw. V-förmig verlaufende Quernuten 2 in vier in Umfangsrichtung umlaufende Blockreihen gegliedert ist. Durch den Verlauf der Quernuten 2 ist das Laufflächenprofil drehsinngebunden gestaltet, wobei der Pfeil P in Fig. 1 in die Abrollrichtung des Reifens zeigt. Ein Reifen mit einem derart ausgeführten Laufflächenprofil ist so am Fahrzeug zu montieren, dass die in die zentrale Umfangsnut 1 einmündenden Enden der Quernuten 2 beim Abrollen des Reifens zuerst in die Kontaktfläche mit dem Untergrund eintreten.

Sowohl die Blöcke 13 der schulterseitig verlaufenden Blockreihen als auch die Blöcke 3 der beiden der zentralen Umfangsnut 1 benachbart verlaufenden Blockreihen sind jeweils mit einer Anzahl von Einschnitten 4, 14 versehen. Bei der dargestellten Ausführungsform entspricht die Erstreckungsrichtung der Einschnitte 4, 14 dem Verlauf der Quernuten 2. Die Breite der Einschnitte 4, 14 wird in der für Einschnitte üblichen Breite und somit in der Größenordnung von 0,4 bis 0,6 mm gewählt. Die Einschnitte 4, 14 durchqueren die Profilblöcke 3, 13 und setzen sich aus mehreren Einschnittabschnitten 4a, 14a, 4b, 14b, 4c, 14c zusammen. Die Abschnitte 4a, 14a sind die äußersten Abschnitte, die gerade und in Erstreckungsrichtung verlaufen und zwischen welchen jeweils, durch kurze in Umfangsrichtung verlaufende Abschnitte 4b, 14b gegen die Laufrichtung versetzt, ein weiterer gerader und in Erstreckungsrichtung verlaufender Abschnitt 4c, 14c verläuft. Die Einschnitte 4, 14 sind nun erfindungsgemäß so gestaltet, dass sich ihr Verlauf in zur Laufflächenperipherie parallelen Ebenen in Abhängigkeit vom Abstand zur Peripherie der Lauffläche ändert.

Fig. 2 zeigt anhand eines entlang eines Einschnittes 4 getrennten Profilblockes 3 (der Einfachheit halber ist der Profilblock 3 mit lediglich einem einzigen Einschnitt 4 dargestellt) eine bevorzugte Ausführungsform der Erfindung. Die Einschnitte 14 in den Blöcken 13 können übereinstimmend ausgeführt sein. Die beiden einen Einschnitt 4 begrenzenden Wände sind, unter Berücksichtigung des durch die Einschnittbreite gegebenen gegenseitigen Abstandes, gegensinnig ausgeführt. Die eine Einschnittwand weist einen einspringenden Bereich 10 und die andere als Gegenstück einen vorspringenden Bereich 10' auf, wobei zwischen diesen Bereichen 10, 10' die Einschnittabschnitte 4b und 4c gebildet sind.

Der einspringende Bereich 10 ist von einer mittigen trapezförmigen Fläche 6 und zwei seitlichen schmalen rechteckförmigen Flächen 5 begrenzt. Die längere der beiden parallelen Seiten der Fläche 6 befindet sich an der Laufflächenperipherie, sodass die Flächen 5 gegenüber der Laufflächenperipherie entsprechend geneigt verlaufen. Der vorspringende Bereich 10' der anderen Einschnittwand wird daher von einer trapezförmigen Stirnfläche 6' und zwei seitlichen schmalen rechteckförmigen Flächen 5' gebildet. An der Basis, dort wo zwei Flächen 7, 7' eingezeichnet sind, bleibt der Block in Verbindung zum Laufstreifengummi.

Bei der in Fig. 2 gezeigten Ausführungsform werden daher mit fortschreitendem Laufflächenabrieb die geraden Einschnittabschnitte 4a länger, der Abschnitt 4c kürzer, die Abschnitte 4b behalten ihre Länge.

Bezogen auf die Abrollrichtung P des Reifens werden die Einschnitte 4, 14 derart angeordnet, dass die vorspringenden Bereiche 10' gegen die Abrollrichtung (Pfeil P) weisen. Dies führt zu einer bestimmten richtungsabhängigen Profilblocksteifigkeit. So wird durch die beim Beschleunigen wirkenden Kräfte der Spalt zwischen den Flächen 6, 6' vergrößert. Es entstehen ausgeprägte Griffkanten, die Profilblöcke 3, 13 verhalten sich vergleichsweise biegeweich. Dabei verhindern die sich in radialer Richtung aneinander abstützenden schräg verlaufenden Einschnittflächen 5, 5' unerwünschte Stauchbewegungen in radialer Richtung.

Bei Beanspruchungen und Kräften, die gegen die Abrollrichtung wirken, beispielsweise beim Bremsen, sei es auf nassen oder auf trockenen Fahrbahnen, wird durch erfindungsgemäß ausgeführte Einschnitte eine in diesem Fall unerwünschte Verformung der Profilblöcke 3, 13 verhindert bzw. vermindert. Die vorspringenden Bereiche 10' werden in die einspringenden Bereiche 10 gedrückt, sodass sich durch ein gegenseitiges Abstützen und Verkeilen eine erhöhte Profilblocksteifigkeit einstellt.

Die beiden Zeichnungsfiguren zeigen vereinfachte und schematische Darstellungen einer möglichen Ausführungsform, bei der pro Einschnitt jeweils ein einspringender Bereich 10 und ein vorspringender Bereich 10' vorgesehen sind. Erfindungsgemäß ausgeführte Einschnitte können auch zwei oder mehr einspringende und mit diesen korrespondierende vorspringende Bereiche aufweisen. Sämtliche ein- und vorspringenden Bereiche werden dabei bezüglich der Abrollrichtung entsprechend angeordnet. Die weiteren Einschnittabschnitte werden so ausgeführt, dass sie die beschriebene erwünschte Wirkung der ein- und vorspringenden Bereiche nicht beeinträchtigen und sind daher bevorzugt gerade Abschnitte mit unstrukturierten Einschnittwandflächen. Um eine möglichst optimale Wirkung zu erzielen, ist es ferner von Vorteil, wenn erfindungsgemäß ausgeführte Einschnittsbereiche im Neuzustand des Reifens eine gewisse Mindesterstreckung aufweisen.

Die Einschnitte können ferner unter einem kleinen spitzen Winkel zur Radialrichtung geneigt werden. Die Trapezform der Einschnittflächen kann ferner beliebig sein und es kann auch der Winkel zwischen den Flächen 5, 5' und 6, 6' variiert werden. Erfindungsgemäß ausgeführte Einschnitte lassen sich durch entsprechend geformte Lamellenbleche, die leicht herstellbar sind, erstellen.

## Patentansprüche

1. Fahrzeugreifen mit einem drehsinngebunden ausgeführten Laufflächenprofil mit Profilelementen mit zumindest einem Einschnitt (4, 14) endlicher Breite, welcher sich quer oder im Wesentlichen quer zur Reifenumfangsrichtung erstreckt und, unter Berücksichtigung der Einschnittbreite, von gegensinnig ausgeführten Einschnittwänden begrenzt ist, wobei Einschnittflächen (5, 6) in der einen Begrenzungswand zumindest einen einspringenden Bereich (10) und Einschnittflächen (5', 6') in der zweiten Begrenzungswand zumindest einen vorspringenden Bereich (10') bilden,
**dadurch gekennzeichnet,**
**dass** die den ein- und den vorspringenden Bereich (10, 10') bildenden Einschnittflächen zwei schmale, insbesondere parallelogrammförmige, Flächen (5, 5') und eine von diesen begrenzte trapezförmige Fläche (6, 6') aufweisen, wobei die längere Parallelseite der trapezförmigen Fläche (6, 6') die Einschnittkante an der Peripherie der Lauffläche bildet, und dass der vorspringende Bereich (10') gegen die Abrollrichtung des Reifens weisend ausgerichtet ist.

2. Fahrzeugreifen nach Anspruch 1, **dadurch gekennzeichnet, dass** die trapezförmigen Einschnittflächen (6, 6') zumindest im Wesentlichen als gleichseitige Trapeze ausgeführt sind.

3. Fahrzeugreifen nach Anspruch 1 oder 2, **dadurch gekennzeichnet, dass** die weiteren Einschnittabschnitte (4a, 14a) zumindest im Wesentlichen gerade verlaufen.

4. Fahrzeugreifen nach einem der Ansprüche 1 bis 3, **dadurch gekennzeichnet, dass** die Einschnitte (4, 14) gegenüber der Radialrichtung geneigt verlaufen.

5. Fahrzeugreifen nach einem der Ansprüche 1 bis 4, **dadurch gekennzeichnet, dass** die von den parallelogrammförmigen Flächen (5, 5') an der Peripherie der Lauffläche gebildeten Einschnittkanten zumindest im Wesentlichen in Reifenumfangsrichtung verlaufen.

## Claims

1. Vehicle tyre having a tread profile which is embodied with binding in the rotational direction and has tread land portions with at least one indent (4, 14) which has a finite width and which extends transversely or essentially transversely with respect to the circumferential direction of the tyre and, including the width of the indent, is bounded by indent walls which are embodied in opposite directions, indent faces (5, 6) in one boundary wall forming at least one recessed region (10) and indent surfaces (5', 6') in the second boundary wall form at least one projecting region (10'), **characterized in that** the indent surfaces which form the recessed region (10) and the projecting region (10') have two narrow, in particular, parallelogram-shaped, surfaces (5, 5') and one trapezoidal surface (6, 6') which is bounded thereby, the longer parallel side of the trapezoidal surface (6, 6') forming the indent edge on the periphery of the tread, and **in that** the projecting region (10') is oriented pointing counter to the rolling direction of the tyre.

2. Vehicle tyre according to Claim 1, **characterized in that** the trapezoidal indent surfaces (6, 6') are embodied at least essentially as equilateral trapeziums.

3. Vehicle tyre according to Claim 1 or 2,
**characterized in that** the further indent sections (4a, 14a) have at least essentially straight profiles.

4. Vehicle tyre according to one of Claims 1 to 3, **characterized in that** the indents (4, 14) have an inclined profile with respect to the radial direction.

5. Vehicle tyre according to one of Claims 1 to 4, **characterized in that** the indent edges formed on the periphery of the tread by the parallelogram-shaped surfaces (5, 5') extend at least essentially in the circumferential direction of the tyre.

## Revendications

1. Bandage pneumatique pour véhicule avec un profil de surface de roulement réalisé de manière liée au sens de rotation avec des éléments profilés avec au moins une entaille (4, 14) de largeur finie, qui s'étend transversalement ou sensiblement transversalement par rapport à la direction périphérique du bandage pneumatique et, si l'on considère la largeur de l'entaille, qui est limitée par des parois d'entaille réalisées en sens contraire, des surfaces d'entaille (5, 6) formant dans l'une des parois de limitation au moins une région rentrante (10) et des surfaces d'entaille (5', 6') formant dans la deuxième paroi de limitation au moins une région saillante (10'),
**caractérisé en ce que**
les surfaces d'entaille formant la région rentrante et la région saillante (10, 10') présentent deux surfaces étroites, notamment en forme de parallélogramme (5, 5'), et une surface trapézoïdale (6, 6') limitée par celles-ci, le côté parallèle le plus long de la surface trapézoïdale (6, 6') formant l'arête d'entaille au niveau de la périphérie de la surface de roulement, et **en ce que** la région saillante (10') est orientée dans la direction opposée au sens de roulement du bandage pneumatique.

2. Bandage pneumatique selon la revendication 1,
**caractérisé en ce que** les surfaces d'entaille trapézoïdales (6, 6') sont réalisées au moins sensiblement sous forme de trapèze isocèle.

3. Bandage pneumatique selon la revendication 1 ou 2, **caractérisé en ce que** les autres portions d'entaille (4a, 14a) s'étendent au moins sensiblement en ligne droite.

4. Bandage pneumatique selon l'une quelconque des revendications 1 à 3, **caractérisé en ce que** les entailles (4, 14) s'étendent suivant une inclinaison opposée au sens radial.

5. Bandage pneumatique selon l'une quelconque des revendications 1 à 4, **caractérisé en ce que** les arêtes d'entaille formées par les faces en forme de parallélogramme (5, 5') à la périphérie de la surface de roulement s'étendent au moins sensiblement dans la direction périphérique du bandage pneumatique.
